# EUROPEAN PATENT APPLICATION

(11) **EP 4 375 307 A1**
(43) Date of publication of application: **29.05.2024**
(21) Application number: 22209106.8
(22) Date of filing: 23.11.2022
(51) Int. Cl.: C08G 18/24, C08G 18/48, C08G 18/72, C08G 18/79, C08J 9/14, C08L 75/04

(54) **SOLID SURFACE MATERIALS BASED ON REACTION MIXTURES WITH TWO KIND OF BLOWING AGENTS**

(71) Applicant: Covestro Deutschland AG, 51373 Leverkusen (DE); Arcesso Dynamics S.L., 08105 Barcelona (ES)
(72) Inventor: Simon Guerrero, Fernando, Sant Feliu de Llobregat (ES); Monton, Ernesto, Sant Fost de Campsentelles (ES)
(74) Representative: Levpat

(57) **Abstract**

The present invention relates to the provision of polyurethane-based structural integral skin solid surface materials. It provides reaction mixtures comprising polyols, polyisocyanates and at least two different kind of blowing agents with different behavior. It is also directed at methods for producing solid surface materials from the aforementioned reaction mixtures.

## Description

The present invention relates to the provision of polyurethane-based structural integral skin solid surface materials. It provides reaction mixtures comprising polyols, polyisocyanates and at least two different kind of blowing agents with different behavior. It is also directed at methods for producing solid surface materials from the aforementioned reaction mixtures.

Recent publications call for the invention of a new solid surface consisting of a foamed polyurethane based on an aliphatic isocyanate that has high lightfastness and excellent mechanical properties. Unlike other solid surfaces on the market, this one has an integral sandwich structure with a foamed core and a compact skin. This structure provides better mechanical properties with lower weight. To ensure that the material is durable and allows multiple repairs by polishing, it is necessary that the skin is extraordinarily thicker than in a conventional integral PU piece that is not prepared to suffer this attack.

Here is proposed an efficient and reliable solution to this challenge by presenting innovations that allow obtaining a much thicker and more regular skin than that presented by a commercial polyurethane piece. This skin is hard, thick and regular in the different working conditions that can occur in an industrial environment.

Solid surface materials are defined as materials formed by a polymer matrix, pigments and fillers that can be processed by sheet shaping or molded products. They are also defined in the ISO Standard 19712-1 UNE.EN: 2013. Solid surface materials are homogenous products, i.e. they have an identical composition throughout their thickness. Due to this feature they can be easily repaired by simple sanding.

Typically, solid surface materials are used in bath and kitchen equipment such as sinks, toilets or countertops. Currently available solid surface materials contain polymer matrices made of acrylic resins or polyester resins. The most frequently used filler is alumina trihydrate.

Structural integral skin materials are defined by an isotropic chemical composition but with a strong density difference between the center (core) of the material and the surface (skin). A common density range in these materials is 1100 to 1400 kg/m³ in the skin and 800 to 400 kg/m³ in the core.

Solid surface materials are characterized by a thick skin which allows repeated sanding, e.g. for repairing a damaged surface, without damaging the surface.

Apart from casting solid surface materials to give it its final shape another common route is the fabrication of slabs and subsequent post production steps like thermoforming. This means that the final shape of the solid surface material is achieved after the resin is fully cured. Hence, conventional solid surface materials are based on thermoplastic resins. Thermoforming, cutting and gluing is often used to create more complex shapes which cannot be created be casting directly with the disadvantage of a time intensive, manual process.

Conventional solid surface products are often sensitive to UV radiation and to acids, bases and cleaning agents so that they cannot be used in outdoors applications without additional radiation protection. Furthermore, it is known that typical cleaning agents like isopropanol may results in stress crack corrosion. Moreover, it is desirable to produce solid surface materials by reaction injection molding (RIM) as this is a fast and efficient process. The polymer matrices discussed above are, however, not very well suited for this method of production because they require long curing times of up to two hours. Additionally, the conventional matrices show high volume shrinkage during the curing process which negatively affects dimensional stability especially in common low pressure RIM or even cast processes. Therefore, it would be desirable to use a system which is (i) UV-resistant fast without additional treatment, (ii) has a good dimensional stability during the curing process and (iii) has short curing times so that it can be processed by RIM.

Polyurethane-based solid surface materials have been described in EP 3 354 669 and WO 2018/172413. A preferred process for manufacturing these materials is the reaction injection molding (RIM) process. However, when using this process, volume shrinkage during curing is a problem as it leads to pores, cavities and the deviation of the finished product from the desired shape. EP 3 354 669 proposes a combination of an irreversible and a reversible blowing agent for manufacturing such materials. However, as the study underlying the present invention showed, the mere combination of an irreversible with a reversible blowing agent in arbitrary proportions is not sufficient to produce such a material. The present application is the first document to describe the components and reaction conditions required for actually manufacturing a material with the properties described in EP 3 354 669.

Therefore, the problem underlying the present invention could be defined as providing a solid surface material with a sandwich structure having a thick integral skin and a foamed core.

This problem is solved by the embodiments defined by the claims and in the description below. Thus, in a first embodiment, the present invention relates to a polyurethane part having at least one area characterized by
(i) a thickness between 8 mm and 50 mm,
(ii) an average density between 0.9 g/cm³ and 1.4 g/cm³ in the first 1.5 mm below the surface, and
(iii) an average density between 0.25 g/cm³ and 0.8 g/cm³ in those parts of polymer which are at least 2.5 mm below the surface,
   obtained or obtainable by polymerizing a composition comprising
   a) a polyol component A1;
   b) a polyisocyanate component A2 comprising to at least 60 wt.-% of aliphatic and cycloaliphatic polyisocyanates;
   c) at least one reversible blowing agent B1;
   d) at least one irreversible agent B2 and
   e) at least one catalyst C.

In a preferred embodiment, the composition further comprises at least one additive selected from the group consisting of pigments, flame retardants, dispersants, emulsifiers, cell regulators, foam stabilizers, biocides and inorganic fillers.

The "polyurethane part" is a product resulting from the reaction of compounds A1 and A2 comprised by the polymerizable composition. In a preferred embodiment of the present invention, the polyurethane part has a thickness between 6 mm and 40 mm, more preferably 8 mm and 40 mm and most preferably 10 mm and 30 mm.

Preferably, the area characterized by the thickness and the densities defined above measures at least 20 mm, more preferably at least 50 mm in each of the other two dimensions. This does not exclude that other parts of the polyurethane part may be thicker or thinner than that and/or have densities which differ from the limitations given in this application. In order to use the material most efficiently, it is particularly preferred that the part has the above-defined thickness over at least 50 %, more preferably at least 75 % of its total area.

Preferably, the polyurethane part hast at least two parallel surfaces. However, it may also have any other shape which is suitable for the intended purpose of the polyurethane part. The polyurethane part is preferably a product selected from the group consisting of bathroom pieces, kitchen equipment, shells for electric and electronic devices, cases for appliances, vehicle parts, architectural parts, indoor furniture and outdoor furniture.

Preferred bathroom pieces are selected from the group consisting of bathtubs, sinks, toilets, toilet seats, bathroom panels and shower trays.

Preferred parts of kitchen equipment are selected from the group consisting of kitchen sinks, cookers, heated display cabinets, cook tops and ovens.

Preferred architectural parts are selected from the group consisting of door panels, wall panels, fence panels, roof lights, wall claddings, door frames and window frames.

Preferred cases for appliances are selected from the group consisting of cases for automated teller machines, refrigerators and washing machines.

Preferred vehicle parts are selected from the group consisting of parts of cars, planes, trains and ships.

Preferred indoor furniture parts are selected from the group consisting of shelves, beds, chairs, desk tops and tables.

Preferred outdoor furniture parts are parts of patio furniture.

Due to the combined action of the blowing agents, the polyurethane part has a higher density close to the surface and a lower density due to stronger foaming at its core. Therefore, in a preferred embodiment of the present invention, the material is characterized by an average density between 1.1 g/cm³ and 1.4 g/cm³ in the first 1.5 mm below the surface.

It is clear from the description of the manufacturing process further below in this application that the density of the material follows a declining gradient beginning with the highest density at the surface and ending with the lowest density at the center. Thus, the density within the two zones defined above will not be homogenous. However, the average density of the core can easily be determined by cutting out a piece of material from the material situated at least 2.5 mm below the surface and determining its density. Similarly, the density of the surface layer can easily be determined by cutting out a piece of material which includes skin and core regions, measuring the thicknesses of the skin and core and subtracting from the total weight of the cut section the weight of the core whose density was determined as set forth above.

A "polymerizable composition" as referred to in the present application is a composition comprising the constituents defined above in such a form that their reaction can be started and said reaction causes a crosslinking of the polyol and the polyisocyanate which results in a polyurethane polymer. Thus, at least components A1 and A2 are present as a homogenous mixture.

### Reversible blowing agent B1

A "reversible" blowing agent is a compound which changes from the liquid phase to gaseous when is subjected to a determined temperature and pressure but it returns to the liquid phase when pressure is increased or the temperature is reduced.. Preferably, the reversible blowing agent shall be liquid at atmospheric pressure and room temperature.

The reversible blowing agent B1 is, preferably, a liquid having a boiling point at atmospheric pressure between 5 °C and 50 °C, more preferably between 10 °C and 30 °C and most preferably between 10 °C and 20 °C.

In a preferred embodiment, the reversible blowing agent B1 has a vapor pressure between 100 kPa and 300 kPa at 50 °C.

The above-defined properties of the first blowing agent are important to get foamed materials with an compact surface. Blowing agents with these properties evaporate in the center of the polymerizable composition once the reaction sets in and creates heat. However, above a certain combination of pressure and temperature they stay liquid or return to their original liquid state. This happens close to the surface, which is cooled by the surrounding environment. Thus, a foamy structure of lower density develops at the core and a solid integral skin with high density develops close to the surface.

Preferred reversible blowing agents B1 are organic molecules of less than 8 carbon atoms that have a boiling point at atmospheric pressure between 10 °C and 50 °C

The products that can be used as reversible blowing agent for the production of solid surface materials are subdivided into three families:
**1. Non-halogenated organic compounds:** these are molecules that always contain carbon and hydrogen. They are interesting due to their high availability in the market and low price. However, their high flammability / explosiveness require treatment in ATEX installations and / or controlled atmospheres. These molecules are preferably:
   **1a**. **Partially oxidized Hydrocarbons:** containing atoms of carbon, hydrogen and at least one atom of oxygen in their molecular composition. These products are esters, ethers, ketones, aldehydes and formic acid. Alcohols must be excluded from this group because of their reactivity with isocyanate.
   **1b**. **Alkanes and cycloalkanes:** containing only atoms of carbon and hydrogen with the formula H_{B}C_{A} Where 1 <A <8 and B = 2A or B = 2 x A + 2. Although they present the risk due to their high flammability, they are soluble in the component A and not reactive . Preferred compounds of this family are butane, isopentane and cyclopentane.
**2. Halogenated organic compounds** having the general formula C_{A}H_{B}X_{J}, where 0 <A <6, H + X = 2 x A + 2 and X is F, Cl or Br. These have been used because of their low flammability.
   Subfamilies in this second group are
   **2a. CHC chlorinated organic compounds:** These compounds have the general formula C_{A}H_{B}Cl_{J}, where 0 <A <6 and B + J = 2xA + 2. Preferred is methylene chloride CH₂Cl₂.
   **2b. CFCs: compounds containing chlorine fluorine and carbon** such as the so-called CFC-11 (CFCl₃ trichlorofluoromethane).
      The general formula is C_{A}F_{J}Clₖ where 0 <A <6 and J + K = 2xA + 2
   **2c. HCFCs: compounds containing chlorine, fluor, hydrogen and carbon:** defined by the general formula H_{B}C_{A}F_{J}Clₖ, where 0 <A <6 and B + J + K = 2xA + 2. Preferred is the so-called HCFC-22 (HCF₂Cl Chlorodifluoromethane) that have low toxicity.
   **2d. HFC (compounds containing Fluorine, Hydrogen and Carbon:** defined by the general formula H_{B}C_{A}F_{J}, where 1 <A <6 and B + J = 2xA + 2. Preferred are HFC 245 (H₃C₃F₅ pentafluoropropane), HFC 227 (HC₃F₇ heptafluotopropane) or HFC 365 (H₅C₄F₅ pentafluorobutane. These compounds present a very low ozone depletion potential and are the most widely used in the world as polyurethane blowing agents.
   **2e.HFO (hydrogen fluor olefins)** : defined by the general formula H_{B}C_{A}F_{J}, where 1 <A <6 and B + J = 2xA, i.e. compounds containing at least one unsaturation or double bond and atoms of fluorine, hydrogen and carbon. These compounds generally have tolerable values ozone depletion potential and global warming potential.
   Preferred are HFO 1100 (H₂C₄F₆ hexafluoro butene) or HFO 1234 (H₂C₃F₄ tetrafluoro propene).
**3. Organic compounds made containing carbon, hydrogen, oxygen and some halogens.**
**These are characterized by the general formula** :C_{A}H_{B}XⱼO_{D}, wherein x stands for halogen. In this group are some Ether derivates.

### Irreversible blowing agent B2

The term "irreversible blowing agent" refers to a compound or a mixture of at least two compounds which increases in volume when heated from an original temperature to an elevated temperature but do not show an equivalent decrease in volume when cooled to the original temperature again. Thus, at least a part of the volume expansion is permanent and cannot be reverted by cooling to the original temperature.

Irreversible blowing agents are preferably based on two mechanisms: the first is the generation of gas due to decomposition of a compound at elevated temperatures, i.e. a chemical reaction rather than a mere change of the state of matter. Thus one preferred irreversible blowing agent B2 is a chemical compound which decomposes when heated to the expansion temperature and releases gas in this this process.

The second and preferred irreversible blowing agents are expandable microspheres. These have a mechanism based on the increase of the radius of a solid shell of material which is caused by heating and boiling of a drop of hydrocarbon inside. Once the shell is inflated, it cannot reverse to its former shape by cooling to the original temperature.

Preferred blowing agents employing the first mechanism are compounds which decompose and release gas when heated. These can be organic or inorganic compounds. Preferred inorganic compounds are sodium borohydride , sodium hydrogen carbonate ,. Preferred organic compounds are azodicarbonamide, oxybis(benzenesulphonylhydrazide), p-toluenesulphonyl hydrazide, toluenesulphonyl semicarbazide and 5-phenyltetrazole. Particularly preferred is azodicarbonamide. In order to decrease its activation temperature salts can be added, particularly zinc oxide.

In a preferred embodiment, the irreversible blowing agent B2 has an expansion temperature between 70 °C and 150 °C. The expansion or activation temperature is the temperature necessary to increase the volume of the blowing agent by a factor of at least 10 at 1013 hPa. Said volume increase may be caused by inflation of a gas, evaporation of a liquid or gas generation by a chemical reaction.

### Combination of blowing agents

The use of both a reversible blowing agent A1 as wells as an irreversible blowing agent B2 is an essential feature of the present invention as only this combinations enables the manufacture of materials with the desired sandwich structure.

The combination of a reversible and an irreversible blowing agent is essential for the present invention. In the early moments of mold filling, the reversible blowing agent expands favoring mold filling, while the irreversible blowing agent selectively expands in the core of the polymerizable composition while remaining inactive near the surface.

Once the pressure generated by the material in the expansion process reaches higher levels, the reversible component undergoes a condensation process in the coldest areas (surface), remaining in gaseous form in the core. Thus, the product has a low density in the center, which saves material and decreases the total weight of the product while maintaining a thick layer of higher density on the surface. This high-density layer makes the product stable for daily use. Without the reversible blowing agent, the polymerizable composition would not completely fill the mold, so that a product with defective shape would result. Without the irreversible blowing agent, the pressure would be lower and the surface condensation of the complementary reversible blowing agent would be incomplete, resulting in a thin or poor quality skin

The total amount of all blowing agents in the composition is between 2 to 8 liters of blowing agent per kg of the polymerizable composition, preferably 3 to 6 liters per kg. The "weight of the polymerizable composition" is its total weight as it is filled into the mold, i.e. it includes components a) to e) and all further additives that may be present. The volume of the blowing agents is given if they were totally boiled or expanded at a temperature 50 °C and a pressure of 1013 hPa.

The study underlying the present invention surprisingly showed that products with the desirable properties can only be obtained using a defined ratio of reversible and irreversible blowing agents. Therefore, the proportion of the reversible blowing agent or agents based on the total amount of blowing agents is 25 vol-% to 75 vol.-% with total amount of the irreversible blowing agent or agents making up the remainder to 100 vol.-%. The volume of the two types of blowing agents if they were totally boiled or expanded calculated as the volume present at a temperature of 50 °C and a pressure of 1013 hPa.

If the proportion of the reversible blowing agent is above 75 vol.-%, the quality of the skin suffers too much because not enough irreversible blowing agent is present. Proportions below 25 vol.-% do not improve skin quality but lead to a deterioration of the shape accuracy of the part because the mold is not properly filled.,

### Polyol A1

Within the context of this application the term "polyol component A1" refers to all OH-group containing organic molecules in the polymerizable composition. Preferably, the polyol component A1 has an average OH-functionality per molecule of at least 2, more preferably at least 3 and an OH-content of at least 15 wt.-% or an OH-value of at least 500 mg KOH/g. The advantage of a high OH-functionality is a high network density of the resulting polymer matrix, thus providing high glass transition temperatures which are a key requirement with respect to desired properties of the resulting solid surface material. Most importantly, a high networking density improves the scratch resistance, chemical resistance, hardness and weathering resistance of these materials.

Preferred polyols to be comprised by the polyol component A1 are aliphatic, cyloaliphatic, aromatic as well as heterocyclic polyols. If aromatic polyols are present in the polyol component A1, they preferably comprise less than 20 wt.-%, more preferably less than 10 wt.-%, even more preferably less than 5 wt.-% and most preferably less than 1 wt.-% of the polyol component A1. Preferably, the polyols comprised by the polyol component A1 exhibit an OH-functionality of at least 2. More preferred polyols to be us in the polyol component A1 are selected from the list consisting of glycol, glycerol, propanediol, butanediol, 1,2,10- decanetriol, 1,2,8-octanetriol, 1,2,3-trihydroxybenzene, 1,1,1-trimethylolpropane, 1,1,1-trimethylolethane, pentaerythritol, sugars, triethanolamine and polyethers obtained by reacting the aforementioned compounds with ethylene glycol and/or propylene oxide . Also preferred are amine-started polyols based on polyaspartic acid .

The stoichiometric ratio of the polyisocyanate component A2 with respect to the polyol component A1 was adjusted to be in between 0.85/1.0 and 1.2/1.0, preferably in between 0.9/1.0 and 1.1/1.0, most preferred to be 1.05/1.0.

### Polyisocyanate component A2

Within the context of this application the term "polyisocyanate component A2" refers to all organic molecules in the polymerizable composition which comprise at least one isocyanate group. The average isocyanate functionality of all molecules comprised by the polyisocyanate component A2 is at least 1.8 and preferably at least 2.0.

The term "polyisocyanate" as used here is a collective term for compounds containing two or more isocyanate groups in the molecule (this is understood by the person skilled in the art to mean free isocyanate groups of the general structure -N=C=O). The simplest and most important representatives of these polyisocyanates are the diisocyanates. These have the general structure O=C=N-R-N=C=O where R typically represents aliphatic, alicyclic and/or aromatic radicals. Suitable diisocyanates are any diisocyanates accessible in various ways, for example by phosgenation in the liquid or gas phase or by a phosgene-free route, for example by thermal urethane cleavage. Preferred diisocyanates are those from the molecular weight range of 140 to 400.

When general reference is made here to "polyisocyanates", this means monomeric and/or oligomeric polyisocyanates alike. For understanding many aspects of the invention, however, it is important to distinguish between monomeric diisocyanates and oligomeric polyisocyanates. When reference is made here to "oligomeric polyisocyanates", this means polyisocyanates formed from at least two monomeric diisocyanate molecules, i.e. compounds that constitute or contain a reaction product formed from at least two monomeric diisocyanate molecules.

For example, hexamethylene diisocyanate (HDI) is a "monomeric diisocyanate" since it contains two isocyanate groups and is not a reaction product of at least two polyisocyanate molecules:

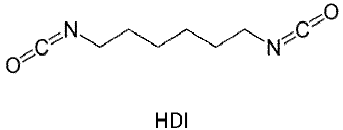

Reaction products which are formed from at least two HDI molecules and still have at least two isocyanate groups, by contrast, are "oligomeric polyisocyanates" within the context of the invention.

Representatives of such "oligomeric polyisocyanates" are, proceeding, for example, from monomeric HDI, HDI isocyanurate and HDI biuret, each of which are formed from three monomeric HDI units:

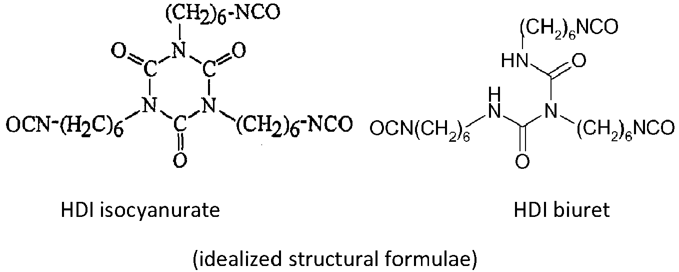

In the context of the present invention both monomeric as well as oligomeric isocyanates are equally useful. However, in a preferred embodiment of the present invention, oligomeric polyisocyanates make up at least 5 wt.-%, more preferably at least 10 wt.-%, even more preferably at least 25 wt.-% and most preferably at least 50 wt.-% of the total mass of the polyisocyanate component A2.

In an especially preferred embodiment of the present invention oligomeric polyisocyanates make up at least 95 wt.-% and, more preferably at least 98 wt.-% of the total mass of the polyisocyanate component A2. Oligomeric polyisocyanate compositions having a low content of monomeric polyisocyanates can be obtained by reacting monomeric polyisocyanates under suitable reaction conditions and subsequently removing unreacted monomeric polyisocyanates, e.g. by thin film distillation.

Preparation processes for oligomeric polyisocyanates suitable for the present invention are described, for example, in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299.

Especially suitable for the present invention are aliphatic or cycloaliphatic polyisocyanates selected from the list consisting of 1,4-diisocyanatobutane (BDI), 1,5-diisocyanatopentane (PDI), 1,6-diisocyanatohexane (HDI), 2-methyl-1,5-diisocyanatopentane, 1,5-diisocyanato-2,2-dimethylpentane, 2,2,4- or 2,4,4-trimethyl-1,6-diisocyanatohexane, 1,10-diiisocyanatodecane, 1,3- and 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane (isophorone diisocyanate; IPDI), 1-isocyanato-1-methyl-4(3)-isocyanatomethylcyclohexane, 2,4'- and 4,4'-diisocyanatodicyclohexylmethane (H12MDI), 1,3- and 1,4-bis(isocyanatomethyl)cyclohexane, bis(isocyanatomethyl)norbornane (NBDI), 4,4'-diisocyanato-3,3'-dimethyldicyclohexylmethane, 4,4'-diisocyanato-3,3',5,5'-tetramethyldicyclohexylmethane, 4,4'-diisocyanato-1,1'-bi(cyclohexyl), 4,4'-diisocyanato-3,3'-dimethyl-1,1'-bi(cyclohexyl), 4,4'-diisocyanato-2,2',5,5'-tetramethyl-1,1'-bi(cyclohexyl), 1,8-diisocyanato-p-menthane, 1,3-diisocyanatoadamantane.

Preferred aromatic polyisocyanates are selected from the lists consisting of 1,3-dimethyl-5,7-diisocyanatoadamantane, 1,3- and 1,4-bis(isocyanatomethyl)benzene (xylylene diisocyanate; XDI), 1,3- and 1,4-bis(1-isocyanato-1-methylethyl)benzene (TMXDI) and bis(4-(1-isocyanato-1-methylethyl)phenyl) carbonate, 2,4- and 2,6-diisocyanatotoluene (TDI), 2,4'- and 4,4'-diisocyanatodiphenylmethane (MDI), 1,5-diisocyanatonaphthalene and combinations thereof.

The above-defined polyisocyanates are equally suitable for use as monomeric polyisocyanates or for manufacture of oligomeric polyisocyanates which can then be used for making the products of the present invention.

Amongst these polyisocyanates the aliphatic and cycloaliphatic polyisocyanates are particularly preferred. The particularly preferred aliphatic polyisocyanates are selected from the list consisting of 1,6-hexane diisocyanate (HDI), dicyclohexylmethane-4,4'-diisocyanate (H12MDI), isophorone diisocyanate (IPDI), 2,2,4-trimethyl-hexamethylene diisocyanate (TMDI) and pentamethylene diisocyanate 5 (PDI).

In a particularly preferred embodiment of the present invention, aliphatic and cycloaliphatic polyisocyanates as defined above make up at least 60 wt.-%, more preferably at least 80 wt.-%, even more preferably at least 90 wt.-% and most preferably at least 95 wt.-% of the total mass of the polyisocyanate component A2. In a very particularly preferred embodiment of the present invention the polyisocyanate component A2 and , thus, the polymerizable composition is free of aromatic and araliphatic polyisocyanates.

Suitable oligomeric polyisocyanates are any polyisocyanates having uretdione, isocyanurate, allophanate, biuret, iminooxadiazinedione and/or oxadiazinetrione structure, prepared by modification of simple aliphatic and/or cycloaliphatic monomeric polyisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299 or by mixtures of at least two such polyisocyanates. In the course of production of these polyisocyanates, the actual modification reaction is generally followed by a further process step for removing the unreacted excess monomeric diisocyanates.

In a further particularly preferred embodiment of the present invention oligomeric polyisocyanates make up at least 60 wt.-%, more preferably at least 80 wt.-%, even more preferably at least 90 wt.-% and most preferably at least 95 wt.-% of polyisocyanate component A2. The use of oligomeric rather than monomeric polyisocyanates contributes to an improved safety when it comes to handling these materials because oligomers have a lower vapor pressure than monomers.

According to the invention it is possible to use combinations of at least two or at least three different monomeric and/or oligomeric polyisocyanates as polyisocyanate component A2.

In order to adjust the viscosity of the polyisocyanate component A2 it is particularly advantageous to combine at least one monomeric polyisocyanate with at least one oligomeric polyisocyanate. Said oligomeric polyisocyanate may be based on the monomeric polyisocyanate employed. It may also be based on a monomeric polyisocyanate which is not present in the polyisocyanate composition A2 as monomer. The aforementioned combination of oligomeric and monomeric polyisocyanates is also useful for decreasing volume shrinkage during the curing process of the polymerizable composition.

### Catalyst C

To accelerate the reaction, customary catalysts known from polyurethane chemistry may be used. Therefore, the polymerizable composition additionally comprises a catalyst C. Suitable as catalyst C is any compound which mediates the formation of urethane groups from isocyanates and polyols. Such compounds are well known to the person skilled in the art, for example tert amines such as triethylamine, pyridine, methylpyridine, benzyldimethylamine, N,N-endoethylene piperazine, N-methylpiperidine, pentamethyldiethylenetriamine, N,N-dimethylaminocyclohexane, N,N'-dimethylpiperazine, 1,5-Diazabicyclo[4.3.0]non-5-ene (DBN), 1,8-Diazabicyclo[5.4.0]undec-7-ene (DBU) or metal salts such as iron(III) chloride, aluminium tri(ethylacetoacetate), zinc chloride, zinc(II) n-octanoate, zinc(II) 2-ethyl-1-hexanoate, zinc(II) 2-ethylcaproate, zinc(II) stearate, zinc(II) naphthenate, zinc(II) acetylacetonate, zinc(II) amidine complexes, as for example Zn(DBU)2(2-ethylhexanoat)2 or Zn(1-Methylimidazol)2(2-ethylhexanoat)2, tin(II) n-octanoate, tin(II) 2-ethyl-1-hexanoate, tin(II) ethylcaproate, tin(II) laurate, tin(II) palmitate, dibutyltin(IV) oxide, dibutyltin(IV) dichloride, dibutyltin(IV) diacetate,dibutyltin(IV) dimaleate, dibutyltin(IV) dilaurate, dioctyltin(IV) diacetate, molybdenum glycolate or combinations thereof.

Preferred catalysts C are dibutyl tin laurate, zinc neodecanoate and bismuth carboxylate Further preferred catalysts are selected from the group consisting of zinc neodecanoate, bismuth carboxylate , Ammonium formiate, ammonium acetate, ammonium octanoate, tin(II) acetate, tin(II) octoate, tin(II) ethylhexoate, tin(II) laurate, dibutyltin diacetate, dibutyltin dilaurate, dibutyltin maleate, dimethyltin dineodecanoate, dimethyltin dioleate, dimethyltin laurylmercaotid, dioctyltin dineodecanoate, dioctyltin diacetate, bismuth 2-ethylhexanoate, cobalt 2-ethylhexanoate, iron 2-ethylhexanoate, sodium acetate, sodium octoate , potassium formiate, potassium acetate, potassium ethylhexanoate, potassium octoate and mixtures thereof.

The polymerizable composition of the present invention preferably comprises the catalyst as defined above in an amount between 0.01% and 2% by weight in the final composition.

### Method

In another embodiment the present invention relates to a method comprising the steps of
a) Providing a polymerizable composition comprising
   (i) a polyol component A1;
   (ii) a polyisocyanate component A2 comprising to at least 60 wt.-% of aliphatic and cycloaliphatic polyisocyanates;
   (iii) at least one reversible blowing agent B1;
   (iv) at least one irreversible agent B2 and
   (v) at least one catalyst C;
b) injecting the polymerizable composition into a mold;
c) curing the polymerizable composition at a temperature between 30 °C and 90 °C.

The term "providing a polymerizable composition" refers to the process of mixing the components A1, A2 and C of the polymerizable composition in such a way that they can react with each other to give a polymer. It is preferred that components B1 and B2 are evenly distributed in the polymerizable composition as well. This can be achieved by any method known in the art and does not pose any further difficulty.

The polymerizable composition is then injected into a mold which is preferably closed and contains only small openings as pressure outlets so that under the temperatures defined in this application the required pressures can be reached. As the polymerizable composition expands during the following curing step due to the activity of blowing agents B1 and B2, it is preferred to fill the mold only partially. It is particularly preferred that 50 to 85 % of the volume of the mold are filled.

It is preferred to keep the temperature of the polymerizable composition during method step b) in the range between 0 °C and 60 °C, preferably 10 °C and 50°C

The curing in method step c) preferably starts without exposing the polymerizable composition to heat from an external source. Typically, the catalyst present in the composition will mediate the formation of urethane bonds. The reaction generated by this process will increase the temperature of the polymerizable composition and, thus, facilitate the reaction.

At the core the temperature is highest as the reaction heat cannot dissipate. The heat decreases closer to the walls of the mold, i.e. to the forming surface of the product because the walls take up some heat and, thus, cool the outer layer of curing material. If materials with a thick skin are desired, this effect is important as the reversible blowing agent B1 expands at the core of the material but remains liquid or condenses due to the lower temperature close to the wall. Thus, the density of the material is lower at the core of product and higher at its surface. This effect is even more pronounced if the walls of the mold are actively cooled. Thus, in a preferred embodiment of the method of the present invention, the walls of the mold are cooled so that they keep a temperature between 30 °C and 80 °C, preferably 40 °C to 70 °C.

Method step c) is performed until the polymerizable composition is fully cured. This point is reached if it has hardened to a point that is dimensionally stable.

In another embodiment of the method, the pressure in the mold is controlled in order to achieve the desired skin thickness.

### Solid surface product

In yet another embodiment, the present invention relates to a polymer obtained or obtainable by the method of the present invention.

The Figure shows:

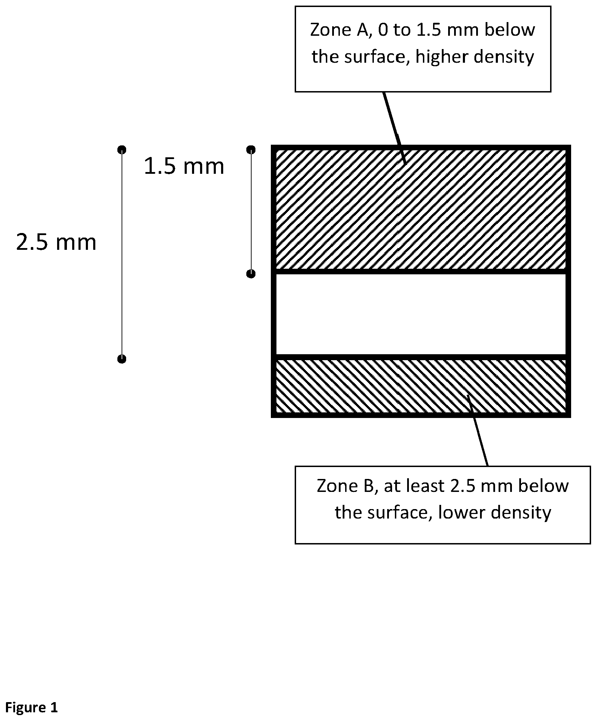

**Figure 1** shows a cross section of the solid surface material. The average density of zone A up to 1.5 mm below the surface is higher than the average density of zone B beginning 2.5 mm below the surface.
The following examples are merely intended to illustrate the present invention. They shall not limit the scope of the claims in any way.

### Examples

### Example 1: Free foaming done in Laboratory prepared to work under ATEX conditions (EXplosive ATmospheres) or adequately ventilated area

A mixture consisting of 40 g of the component A formulation described in table 1 below was prepared at room temperature. The components were free of water. The reversible blowing agent was added under manual stirring, in a well ventilated environment. It was stirred manually for 30 seconds observing the incorporation of the gas. The proportional amount of an aliphatic isocyanate prepolymer with 20 wt.-% NCO was added at 40 °C. The mixture was stirred vigorously, poured into an open paper cup and free foaming was observed.

**Table 1: Compositions used for free-foaming**

| Chem Family | Product | 0 | 1 | 2 | 3 | 4 |
|---|---|---|---|---|---|---|
| Polyether Polyol | OHV 1000 | 50.0 | 50.0 | 50.0 | 50.0 | 50.0 |
| Inorganic Fillers | AL(OH)3 | 42.0 | 42.0 | 42.0 | 42.0 | 42.0 |
| Tin Catalyst | DBTL | 0.5 | 0.5 | 0.5 | 0.5 | 0.5 |
| Tensoactive | Silane | 0.5 | 0.5 | 0.5 | 0.5 | 0.5 |
| Irreversible Blowing A | Microspheres | 7.0 | 7.0 | 7.0 | 7.0 | 7.0 |
| | | | | | | |
| Reversible Blowing Agent | | --------- | CHC | HC | HFC | HFO |
| CHC | CH2CI2 | | 10.0 | | | |
| HC | Hexane | | | 10 | | |
| HFC | 365 | | | | 8.7 | |
| HFC | 227 | | | | 1.3 | |
| HFO | 1100 | | | | | 10 |
| Poly isocianate | NCO 20 | 180.0 | 180.0 | NT | 180.0 | 180.0 |
| | | | | | | |
| Observations | Miscibility | | Good | Good | Good | Good |
| | Foaming | weak | X2-3 | NT | X2-3 | X2-3 |
| | Surface | Regular | Irregular | NT | Regular | Regular |

| | | | | | | |
|---|---|---|---|---|---|---|
| NT ( Not tested) | | | | | | |

The results indicate that the incorporation under energy shaking of the test samples (Blowing Agents Reversible) was good in all cases.

The foaming of a free foam vessel resulted in an increase in volume between 2 and 3 times the initial volume in the three cases tested (1, 3, 4)

The dome formed had a smooth surface except with CH₂Cl₂.

### Example 2 Sandwich Structure evaluation in molded form (pilot plant trials with machine)

The objective of this innovation is to achieve a sandwich structure in a single operation with thick, compact skin and a low density core. To verify the effectiveness of these innovations, in this trial the core density with different amounts of blowing agent was evaluated. A lower core density results in a greater accumulation of material on the outer walls of the piece, forming a thicker skin. The products tested are described below in table 2. The order of addition is the same as the order in the table.

**Table 2: Components used for pilot trials**

| **Product** | Description | Producer |
|---|---|---|
| Polyol | Polyether polyol based; hydroxyl number 900. Trifunctional. Molecular Weight Average 187 | BASF |
| Surfactant | Non-ionic tensioactive | BYK |
| Inorganic Filler | Apyral^{®} Aluminium trihydroxide | Nabaltec |
| Metal Catalyst | Kosmos^{®} Organo Tin Compound CAS 68928-76-7 Neodecanoic acid, 1,1'-(dimethylstannylene) ester | Evonik |
| Irreversible Blowing Agent | Thermoplastic microspheres Filled with a mixture of hydrocarbon with a density of 12 g/l (after expansion) | Akzo Nobel |
| Reversible Blowing Agent | Hydrofluoro-olefin HFO-1336mzz CAS 692-49-9 | Chemours |
| Aliphatic Isocyanate | Desmodur NZ200^{®} Oligomeric Polyisocyanate, 21 % NCO based in aliphatic and cycloaliphatic diisocyanates | Covestro |

The components of the previously tempered and homogenized formulation were mixed in a polyurethane injection machine. The material was simultaneously and continuously poured into an aluminum mold tempered at 45 °C. When the pouring was finished the mold was closed. After some minutes the mold was opened and the part was removed and stored 24 h. The part was trimmed to visualize the cut side. Measurements of skin thickness, hardness and a quality evaluation were made on the extracted parts.

**Table 3: The following combinations of components were tested (amounts in g)**

| **Product** | A | 1 | 2 | 3 | 4 | 5 |
|---|---|---|---|---|---|---|
| Polyol | 17.00 | 17.00 | 17.00 | 17.00 | 17.00 | 17.00 |
| Surfactant | 3.50 | 3.50 | 3.50 | 3.50 | 3.50 | 3.50 |
| Inorganic Filler | 13.00 | 13.00 | 13.00 | 13.00 | 13.00 | 13.00 |
| Metal Catalyst | 0.20 | 0.20 | 0.20 | 0.20 | 0.20 | 0.20 |
| Irreversible blowing agent. | 0.00 | 0.00 | 1.30 | 3.00 | 2.60 | 2.60 |
| REVERSIBLE Blow Ag. | 0.00 | 1.60 | 1.60 | 0.00 | 1.60 | 2.40 |
| Aliphatic Isocyanate | 62.10 | 62.10 | 62.10 | 62.10 | 62.10 | 62.10 |
| **TOTAL** | 95.80 | 97.40 | 98.70 | 98.80 | 100.00 | 100.80 |

### Formulation A (comparative): determination of skin density

The resin previously dried without the Blowing Agent was reacted with the isocyanate. A compact, non-foamy piece and translucent piece was obtained. The density of the piece was measured by immersion. The density was about 1100 kg/m3. For sandwich parts with a foamy core, a fully compact skin without microbubbles (as checked with a microscope) can be assumed to have a similar local density in the skin area.

### Determination of core density (all examples)

The core density was calculated as follows: the apparent density of the total part was measured either by the method of Archimedes (immersion), or by weighing and measurement of a rectangular sample. The piece was cut, and the skin formed on each side was examined and measured by a high magnifying glass with an accuracy of 50 microns. If it was homogeneous and without bubbles, it was considered that it had a density of 1100 kg/m³. If not, a lower density was estimated.

Knowing the thickness and density of the skin, the weight of the skin was calculated. By mathematical calculation (subtracting skin weight from total and skin volume from total) the get core density was calculated. This method had been tested in specific cases by mechanically removing the skin and measuring the density of the foamed core separately. The correlation proved correct.

### Results

**Table 4: Compositions 1 and 3 (comparative) with only one type of blowing agent**

| | Total Density | Formula1 700 | Formula 3 660 |
|---|---|---|---|
| Thickness in mm | Thickness | 10.0 | 20.0 |
| | skin bottom | 1.9 | 2.0 |
| | skin top | 1.5 | 0.0 |
| | Core | 6.6 | 18.0 |
| Density in kg/m³ | Skin | 800 | 1100 |
| | Core | 648 | 611 |
| | | skin foamed | no flow |

The lack of the irreversible blowing agent in composition 1 prevents the formation of a compact skin. The absence of the reversible blowing agent in composition 3 made it difficult to fill the mold, even with using a special mold with a thickness of only 20 mm.

**Table 5: Composition 2 (comparative)**

| | Total Density | 868 | 702 | 546 |
|---|---|---|---|---|
| Thickness in mm | Thickness | 10.0 | 10.0 | 10.1 |
| | skin bottom | 2.5 | 2.2 | 1.5 |
| | skin top | 2.5 | 2.2 | 1.3 |
| | Core | 5.0 | 5.6 | 7.3 |
| Density in kg/m³ | Skin | 1000 | 1000 | 1000 |
| | Core | 737 | 468 | 333 |
| | | skin sligthly foamed | | |

A low concentration of the irreversible blowing agent produced a slightly foamed skin rather than a compact one.

**Table 6: Results for composition 4 (inventive)**

| | Total Density | 818 | 717 | 657 | 582 |
|---|---|---|---|---|---|
| Thickness in mm | Thickness | 10.2 | 10.0 | 10.4 | 10.4 |
| | skin bottom | 1.5 | 1.2 | 1.6 | 1.6 |
| | skin top | 1.2 | 1.4 | 1.3 | 1.4 |
| | Core | 7.5 | 7.4 | 7.5 | 7.4 |
| Density in kg/m³ | Skin | 1100 | 1100 | 1100 | 1100 |
| | Core | 716 | 582 | 485 | 371 |

In this series of trials independently of the densities a perfect and relatively thick skin was observed. The core density was proportional to the total density having in all cases an excellent gradient of core and skin densities and therefore an optimum sandwich structure.

**Table 7: Results for composition 5**

| | Total Density | 777 | 574 | 650 |
|---|---|---|---|---|
| Thickness in mm | Thickness | 10.1 | 10.1 | 10.1 |
| | skin bottom | 1.4 | 1.2 | 1.2 |
| | skin top | 1.3 | 1.1 | 1.2 |
| | Core | 7.4 | 7.8 | 7.7 |
| Density in kg/m³ | Skin | 1100 | 1100 | 1100 |
| | Core | 659 | 418 | 510 |

In this series of trials the ratio between the two blowing agents was increased. This composition still gave an excellent skin, but the density of the core was higher, so that the distribution of material was slightly less efficient.

The comparison of composition 2 on the one side and compositions 4 and 5 on the other side shows that the mere combination of a reversible blowing agent with an irreversible blowing agent is not sufficient to produce sandwich materials which have fully satisfying properties. The concentration of the irreversible blowing agent as well as the ratio of the two blowing agents have to optimized. This point is further analyzed in Example 4

### Example 3: Machine trials with different thicknesses and shapes

Three pieces were made with a stepped mold in order to evaluate the performance of the material at different thicknesses. The used formulation is the number 4 of example 2. It was filled into a stepped mold with thicknesses of 6 mm, 12 mm, 22 mm and 32 mm and a total volume of 6.0 liters.

The mold was inclined 15º placing the thickest part in the upper area to facilitate the flow of the material and the filling. The average working temperatures of the different components were 45 ºC. The mold was tempered at the same temperature. Materials were mixed in a small pilot continuous batching and mixing machine. The casting time was 22.5 seconds. A bigger machine with a higher output should avoid this problem. In any case, the tests carried out indicate that the mechanical properties and the functionality of the piece were not affected.

**Table 8: Results with products of different thickness**

| Nominal Thickness | cm | 0,5 | 1 | 2 | 3 | Average |
|---|---|---|---|---|---|---|
| Measured Thickness | mm | 6.20 | 11.50 | 21.50 | 31.50 | |
| Skin Frontal | mm | 2.90 | 2.00 | 2.20 | 1.70 | |
| Back Side Skin | mm | 2.90 | 2.00 | 1.90 | 0.70 | |
| Apparent Density | kg/m3 | 1173 | 870 | 730 | 637 | Apr.780 |
| Skin Density | kg/m4 | 1200 | 1150 | 1100 | 1050 | 1100 |
| Core Density | kg/m5 | 782 | 721 | 643 | 603 | 633 |
| | | | | | | |
| Hardness Skin | Shore D | 80 | 79 | 77 | 82 | |
| Hardness Core | Shore D | | 47 | 42 | 42 | |
| Hardness Skin | after curing | 83.5 | 82 | 80 | 84.5 | |
| Hardness Core | after curing | | 48 | 46 | 46 | |

The properties of the density distribution and skin thickness remained fairly stable with thickness . While the total density of the part varied greatly with thickness, the separate densities of the skin and foam were much more stable. For parts with a thickness between 10 mm and 30 mm a skin thickness between 1.7 mm and 2.2 mm was obtained. The skin had a density of approximately 1,100 kg/m³.

The products with a thickness of 6 mm and less no sandwich structure was obtained. The weights and the total or apparent densities of the parts varied with the thickness, but the local densities of surface and core as well as the general properties of the material were maintained. It is perfectly feasible to make pieces with thicknesses from 6 mm to 30 mm in the same piece. The piece has the desired sandwich structure with a thick and hard skin and a foamed core in all areas where locally the thickness is between 10 and 30mm without observing appreciable defects.

### Example 4: Sandwich structure evaluation in molded foam (laboratory controlled conditions)

In order to have a very accurate control of the parameters parallel trials to Example 2, trials with the same aim were conducted under laboratory conditions and manual stirring. To verify the effectiveness of these innovations, in this trial the manufacture of the material was evaluated while maintaining an identical total amount of blowing agents in all samples. Only the proportions of the two blowing agents were varied. The products were manufactured are as described below. The order of addition is the same as the order in the table.

**Table 9: Components used for pilot trials**

| **Product** | Description | Producer |
|---|---|---|
| Polyol | Polyether polyol based; hydroxyl number 900. Trifunctional. Molecular Weight Average 187 | BASF |
| Surfactant | Non-ionic tensioactive | BYK |
| Inorganic Filler | Apyral^{®} Aluminium trihydroxide | Nabaltec |
| Metal Catalyst | Fomrez^{®} Organo Tin Compound CAS 77-58-7 [dibutyl(dodecanoyloxy)stannyl] dodecanoate | Galata |
| Irreversible Blowing Agent | Thermoplastic microspheres Filled with a mixture of hydrocarbon with a density of 12 g/l (after expansion) | Akzo Nobel |
| Reversible Blowing Agent | Blend 87/13 of 1,1,1,3,3-Pentafluorobutane and 1,1,1,2,3,3,3-Heptafluoropropan | Solvay |
| Aliphatic Isocyanate | Desmodur NZ200^{®} Oligomeric Polylsocyanate 21 % NCO based in Aliphatic and Cycloaliphatic Disiocianates | Covestro |

The tempered components tempered were mixed manually. The mixture was then poured into an aluminum closed mold tempered at 45°C. The mouth of the mold was immediately closed. After some minutes the mold was opened and the part was removed and stored for 24 h. Then the part was trimmed to visualize the internal structure. Measurements of skin thickness, hardness and a visual quality evaluation have were made on the extracted parts.

Shape accuracy was determined by measuring the actual density of the product by water immersion and comparing the measured density with the theoretical density of a part which completely fills the whole volume of the mold.

**Table 10: Formulas tested in this example: (amounts in parts by weight)**

| **Amounts Tested in gr** | | | | | |
|---|---|---|---|---|---|
| **Product** | **LAB 1** | **LAB 2** | **LAB 3** | **LAB 4** | **LAB 5** |
| Polyol | 100 | 100 | 100 | 100 | 100 |
| Surfactant | 23 | 23 | 23 | 23 | 23 |
| Inorganic Filler | 74 | 74 | 74 | 74 | 74 |
| Metal Catalyst | 0.9 | 0,9 | 0,9 | 0,9 | 0.1 |
| Irreversible Blowing Agent | 0 | 7.5 | 15 | 23.5 | 32 |
| Reversible Blowing Agent | 17.35 | 13.275 | 9.2 | 4.6 | 0 |
| | | | | | |
| Aliphatic Isocyanate | 357 | 357 | 357 | 357 | 357 |
| TOTAL | 572.25 | 574.775 | 578.2 | 582.1 | 586.1 |
| | | | | | |

Each blowing agent has a different density when expanded, here the amount in liters considering Normal conditions of pressure and Temperature (total amount in liters constant).

### Amounts tested in liter

| | | | | | |
|---|---|---|---|---|---|
| Reversible Blowing Agent | 2.67 | 2.04 | 1.42 | 0.71 | 0.00 |
| Irreversible Blowing Agent | 0.00 | 0.63 | 1.25 | 1.96 | 2.67 |

For the case of the reversible agent the formula of perfect gases was used: PV= nrT where n=m/Mw. P=1 Atm, r=0,082, T=298ºK and Mw is in this example 149,6 g/mol according to the manufacturer's instructions. m is the mass of Rev Blowin Agent in grams of the formulation. For the irreversible blowing agent the density of the material once expanded given by the manufacturer was used, in this case 12g/l.

Although in this example the normal conditions of Pressure and Temperature have been used; in the wording of the claims the volumes are fixed at temperatures of 70ºC in order to have greater consistency. In all cases we used Charles's law of gases VT=k has been used to convert volume to other temperatures.

**Table 11: Results**

| | | **LAB 1** | **LAB 2** | **LAB 3** | **LAB 4** | **LAB 5** |
|---|---|---|---|---|---|---|
| Thickness in mm | Thickness | 10.1 | 10.1 | 10.1 | 10.1 | 10.1 |
| | skin bottom | 1.5 | 1.6 | 1.9 | 2.2 | 2.1 |
| | skin top | 1.5 | 1.6 | 2.0 | 2.0 | 2.1 |
| | Core | 7.1 | 6.9 | 6.2 | 5.9 | 5.9 |
| Density in kg/m3 | Skin | 1000 | 1100 | 1200 | 1200 | 1200 |
| | Core | 689.5 | 573.0 | 510.4 | 477.6 | 434.8 |
| Quality | Skin | 1.0 | 3.0 | 4.5 | 5.0 | 5.0 |
| | Core | rough | medium | fine | very fine | very fine |
| Hardness ShD | bottom^{∗} | 78 | 80 | 81 | 80 | 81 |
| Measured Density | | 782 | 740 | 778 | 778 | 753 |
| Theorical Density | | 790 | 758 | 799 | 802 | 782 |
| Shape Accuracy | | 99.0% | 97.6% | 97.4% | 97.0% | 96.3% |

The optimal relationship of the two blowing agents is achieved when they are balanced in volumes (not in weight). The best samples are obtained with formula LAB3.

The results indicate that a minimum amount of irreversible blowing agent of 25 vol.-% based on the total volumes of the two blowing agents is required to get a skin quality which is at least satisfactory. A further increase of the proportion of the irreversible blowing agent to 75 vol.-% (LAB 4) improves the surface quality further. Beyond that, no improvement could be achieved. However, increasing proportions of the irreversible blowing agent are also associated with an undesired effect: the shape accuracy of the molded part decreases. Thus, for proportions of the irreversible blowing agent above 75 vol.-% the decreasing shape accuracy is not balanced by improved surface quality so that this content of irreversible blowing agent is the highest useful amount.

The decreasing shape accuracy reflects difficulties in the complete and even filling of the mold. In industrial conditions with a large and complex molds these filling difficulties cause local defects of the products.

## Claims

1. Polyurethane part having at least one area **characterized by**
(i) a thickness between 8 mm and 50 mm,
(ii) an average density between 0.9 g/cm³ and 1.4 g/cm³ in the first 1.5 mm below the surface, and
(iii) an average density between 0.25 g/cm³ and 0.8 g/cm³ in those parts of polymer which are at least 2.5 mm below the surface,
obtained or obtainable by polymerizing a composition comprising
a) a polyol component A1;
b) a polyisocyanate component A2 comprising to at least 60 wt.-% of aliphatic and cycloaliphatic polyisocyanates;
c) at least one reversible blowing agent B1;
d) at least one irreversible agent B2 and
e) at least one catalyst C.

2. The polyurethane part according to claim 1, wherein the total amount of all blowing agents present in the polymerizable composition is 2 to 8 liters blowing agent per kg of the polymerizable composition, wherein the volume of the blowing agents is given based on a temperature of 50 °C and a pressure of 1013 hPa.

3. The polyurethane part according to claim 2, wherein the volume of the reversible blowing agent is 25 vol.-% to 75 vol.-% and the volume of the irreversible blowing agent adds up to 100 vol.-% and wherein the volumes of the blowing agents are calculated as set forth in claim.

4. The polyurethane part according to any one of claims 1 to 3, wherein the area having the characteristics as defined by items (i) to (iii) measures at least 20 mm in each of the other two dimensions.

5. The polyurethane part composition according to any one of claims 1 to 4, wherein the reversible blowing agent B1 has a boiling point at atmospheric pressure between 5 °C and 50 °C.

6. The polyurethane part according to any one of claims 1 to 5, wherein expandable microspheres are used as irreversible blowing agent.

7. The p polyurethane part according to any one of claims 1 to 6, wherein the irreversible blowing agent B2 has an expansion temperature between 70 °C and 150 °C.

8. The polyurethane part according to any one of claims 1 to 7, wherein the polyol component A1 has an average OH-functionality per molecule of at least 2 and an OH-content of at least 15 wt.-%.

9. The polyurethane part according to claim 8, wherein the polyol component A1 comprises at least one compound selected from the list consisting of glycol, glycerol, propanediol, butanediol, 1,2,10- decanetriol, 1,2,8-octanetriol, 1,2,3-trihydroxybenzene, 1,1,1-trimethylolpropane, 1,1,1-trimethylolethane, pentaerythritol, sugars and polyethers obtained by reacting the aforementioned compounds with ethylene glycol and/or propylene oxide.

10. The polyurethane part according to any one of claims 1 to 9, wherein the part is selected from the group consisting of bathroom pieces, kitchen equipment, shells for electric and electronic devices, cases for appliances, vehicle parts, architectural parts, indoor furniture and outdoor furniture.

11. Method comprising the steps of
a) Providing a polymerizable composition comprising
(i) a polyol component A1;
(ii) a polyisocyanate component A2 comprising to at least 60 wt.-% of aliphatic and cycloaliphatic polyisocyanates;
(iii) at least one reversible blowing agent B1;
(iv) at least one irreversible agent B2 and
(v) at least one catalyst C;
b) injecting the polymerizable composition into a mold; and
c) curing the polymerizable composition at a temperature between 30 °C and 90 °C.
